# EUROPÄISCHE PATENTANMELDUNG

(11) **EP 0 986 233 A2**
(43) Veröffentlichungstag der Anmeldung: **15.03.2000**
(21) Anmeldenummer: 99111769.8
(22) Anmeldetag: 18.06.1999
(51) Int. Cl.: H04M 1/02

(54) **Rotationseinheit für einen Tastaturdeckel eines tragbaren Telefons sowie ein derartiges Telefon**

(30) Priorität: 09.09.1998 DE 19841060
(71) Anmelder: ROBERT BOSCH GMBH, 70442 Stuttgart (DE)
(72) Erfinder: Bieneck, Uwe, 31234 Edemissen (DE); Reuter, Markus, 38102 Braunschweig (DE); Edler, Klaus, 31249 Hohenhameln (DE); Lerchner, Henry, 31224 Peine (DE)

(57) **Zusammenfassung**

Bei einer Rotationseinheit für einen Tastaturdeckel eines tragbaren Telefons, wobei die Rotationseinheit einen zwischen zwei Antriebsfederkräften eingespannten Stift aufweist, dessen Radien in zwei aufeinander senkrechte stehenden Hauptrichtungen unterschiedlich sind, ist der Stift in Längsrichtung gegen eine axiale Federkraft beweglich ausgebildet.

Die Antriebsfederkräfte sind gegenläufig und wirken senkrecht auf den Stift, wobei die Feder zur Erzeugung der Antriebskräfte und die Feder zur Erzeugung der axialen Kraft einstückig ausgebildet sind.

## Beschreibung

Die Erfindung betrifft eine Rotationseinheit für einen Tastaturdeckel eines tragbaren Telefons sowie ein entsprechendes Telefon.

Es sind Tastaturdeckel, die auch als Flips bezeichnet werden, für tragbare Telefone bekannt, bei denen der "Antrieb" beziehungsweise die Führung des Tastaturdeckels durch einen Stift realisiert ist, dessen Querschnitt nicht kreisrund ist und der zwischen zwei Federschenkel eingeklemmt ist. Durch die Unrundheit wird der Stift, der in der Rotationsachse des Tastaturdeckel liegt bzw. diese bildet, in zwei Lagen, nämlich 0° und 180°, gezwungen.

In der Längsrichtung der Achse des Stifts ist das bekannte Prinzip starr. Das bedeutet, daß bei der Montage der Flip aus zwei Hälften bestehen muß, um ein Zusammenfügen zu ermöglichen. Dies führt zu größeren Gerätedicken und erheblichen Montagekosten. Ferner ist es nicht möglich, ein System zu schaffen, bei dem der Flip bei zu großer Belastung vor seiner Zerstörung vom Gerät abspringt.

Der Erfindung liegt daher die Aufgabe zugrunde, eine Rotationseinheit für den Tastaturdeckel eines tragbaren Telefons und ein entsprechendes Telefon zu schaffen, wobei die Rotationseinheit einfach und platzsparend zu montieren ist und die das Abspringen des Tastaturdeckeis bei Überlastung ermöglicht.

Die Aufgabe wird durch die Merkmale des Anspruchs 1 und des Anspruchs 7 gelöst. Bevorzugte Ausgestaltungen der Erfindung sind Gegenstand der Unteransprüche.

Die erfindungsgemäße Rotationseinheit für einen Tastaturdeckel eines tragbaren Telefons weist einen zwischen zwei Antriebsfederkräften eingespannten Stift auf, dessen Radien in zwei aufeinander senkrecht stehenden Hauptrichtungen unterschiedlich sind, wobei der Stift in Längsrichtung gegen eine axiale Federkraft beweglich ist.

Ferner sind die Antriebsfederkräfte gegenläufig und wirken senkrecht auf den Stift, wobei vorzugsweise die Antriebskräfte durch zwei Federschenkel einer Feder erzeugt werden. Vorzugsweise kann die axiale Federkraft durch eine Blattfeder erzeugt werden, aber eine andere Ausführung der Feder zur Erzeugung der axialen Federkraft ist entsprechend den Notwendigkeiten möglich.

Ferner sind die Federschenkel zur Erzeugung der Antriebskräfte und die Feder zur Erzeugung der axialen Kraft einstückig als ein Federelement ausgebildet.

Vorzugsweise weist der Stift einen unrunden Abschnitt und einen runden Abschnitt auf, wobei die Kräfte der Federschenkel an dem unrunden Abschnitt angreifen.

Ferner weist der Stift ein Koppelelement auf, mit dem die Rotationseinheit mit dem Tastaturdeckel verbunden wird.

Vorzugsweise greift bei einem tragbaren Telefon, das einen Tastaturdeckel mit einer Rotationseinheit gemäß der Erfindung aufweist, der Tastaturdeckel auf der einen Seite in eine feste Lagerung ein und wird auf der anderen Seite durch die Rotationseinheit gehaltert.

Vorzugsweise wird bei einem Öffnen des Tastaturdeckel über seine Sollposition hinaus der Stift durch eine Sicherungsvorrichtung gegen die axiale Federkraft aus dem Tastaturdeckel herausgedrückt. Beispielsweise kann die Sicherungsvorrichtung durch einen Keil gebildet werden, durch den der Stift aus dem Flip gedrückt wird.

Eine bevorzugte Ausführungsform der Erfindung wird nachfolgend anhand der Zeichnungen erläutert.
Fig.1 zeigt eine perspektivische Darstellung der erfindungsgemäßen Rotationseinheit,
Fig. 2 zeigt eine Draufsicht auf die Rotationseinheit im eingebauten Zustand unter 0° bzw. 180°,
Fig. 3 zeigt eine Draufsicht auf die Rotationseinheit im eingebauten Zustand unter 90° bzw. 270°, und
Fig. 4 zeigt eine Draufsicht auf die Rotationseinheit im eingebauten Zustand wobei der Stift durch eine Kraft aus dem Flip herausgedrückt wird.

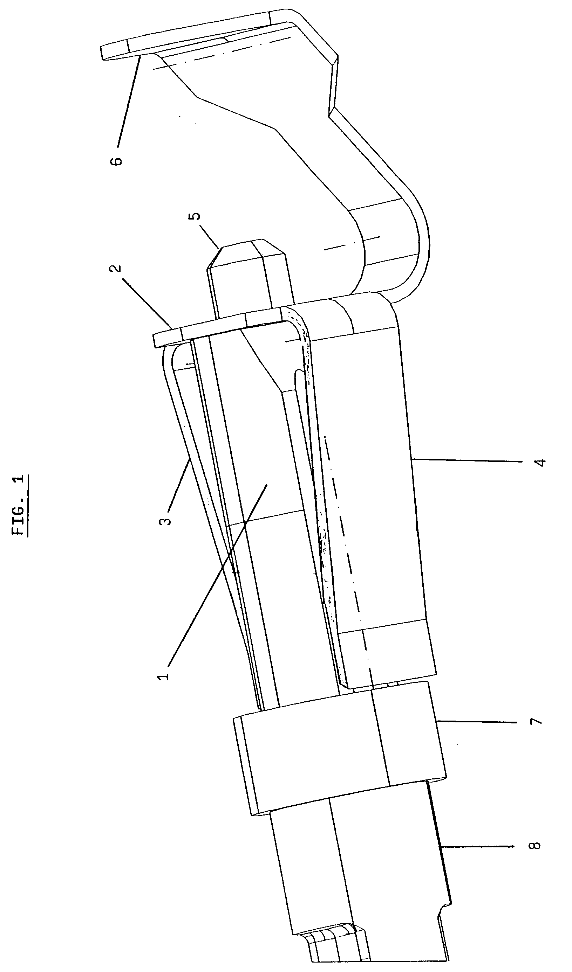

Fig.1 zeigt eine perspektivische Darstellung der erfindungsgemäßen Rotationseinheit, die einen Stift 1 und einer Feder 2 aufweist. Der Stift 1 ist in zwei zueinander senkrecht stehenden Richtungen verschieden dick, mit anderen Worten unrund, beispielsweise elliptisch. Die Feder 2 weist zwei Federschenkel 3 und 4 auf, in die der unrunde Stift 1 eingespannt ist und die den Rotationsfederantrieb bilden. An seinem einen Ende weist der Stift einen Zapfen 5 auf, der in eine entsprechende Öffnung der Feder 2 eingreift. Ferner ist an dem den Federschenkeln 3 und 4 entgegengesetzten Ende der Feder eine weitere Feder 6 in Form einer Blattfeder ausgebildet, die eine Federkraft in axialer Richtung des Stiftes 1 erzeugt. Ferner weist der Stift 1 einen umlaufenden Kragen 7 auf, der zur Lagerung der Rotationseinheit benötigt wird. An seinem andere Ende weist der Stift 1 weiterhin ein Koppelelement 7, das die Rotationseinheit mit dem Tastaturdeckel (nicht dargestellt) koppelt.

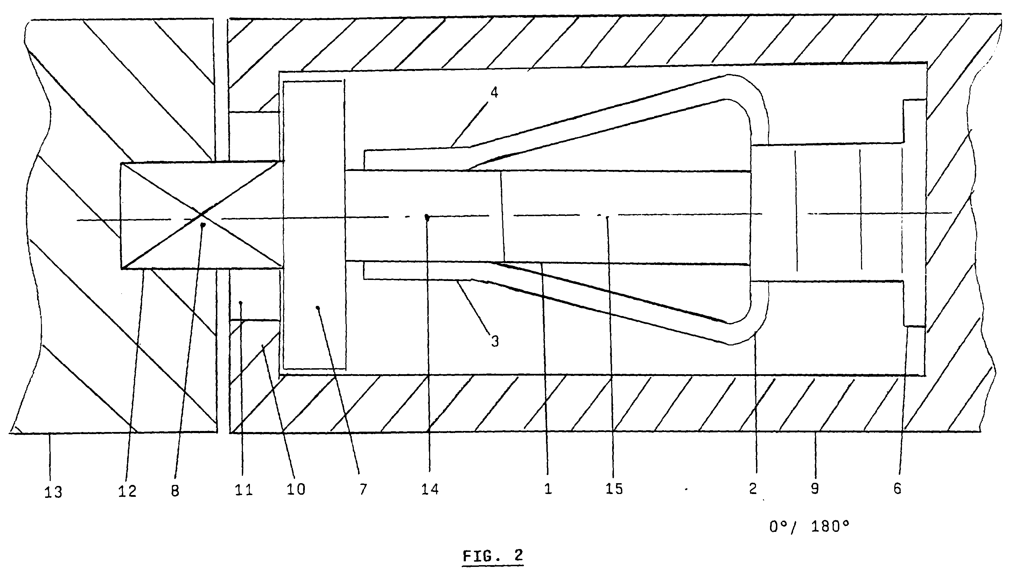

Fig. 2 zeigt die in ein tragbares Telefon eingesetzte Rotationseinheit bestehend aus den im Zusammenhang mit Fig. 1 beschriebenen Komponenten. Die Rotationseinheit ist in einem Gehäuse 9 angeordnet, wobei die Feder 6 zur Erzeugung der axialen Federkraft die Rotationseinheit in das Gehäuse 9 einspannt, so daß der Kragen 7 an einer Wand 10 des Gehäuses 9 anliegt. Die Wand 10 weist eine Öffnung 11 auf, durch die das Koppelelement 8 durchgreift und mit einem entsprechenden Gegenstück 12 des Testaturdeckels 13 in Eingriff ist. Dargestellt in Fig. 2 ist die Situation, in der der Stift 1 mit seiner Schmalseite, d.h. minimalem Radius, zwischen den Federschenkeln 3 und 4 angeordnet ist. Diese Situation wird als Winkel 0° bzw. 180° bezeichnet und ist die stabile Lage der Rotationseinheit. Ferner ist der Stift 1 in dieser Ausführungsform in einen unrunden Teil 14 und einen kreisförmigen Abschnitt 15 untergliedert. An dem unrunden Abschnitt 14 greift die durch die Federschenkel 3, 4 ausgeübte Kraft an.

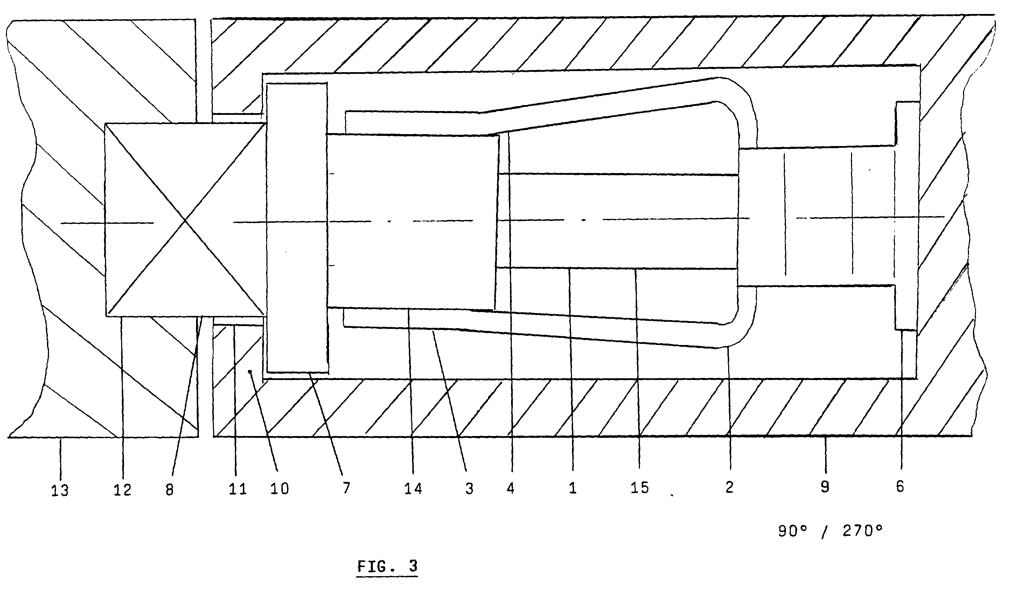

Fig. 3 zeigt die Situation der Rotationseinheit bei einem Winkel von 90° bzw. 270°. Deutlich zu erkennen ist, daß nunmehr die breite Seite des unrunden Abschnitts 14 zwischen den Federschenkeln 3 und 4 angeordnet ist, wodurch eine erhöhte Kraft auf den Stift 1 ausgeübt wird. Dieser Zustand ist bei entsprechender Beschaffenheit des unrunden Abschnitts 14 ein labiles Gleichgewicht, da bei einer geringfügigen Abweichung von diesem Zustand die Federkraft der Federschenkel 3, 4 eine Bewegung des Stiftes hin zu der 0° bzw. 180° Stellung erzeugt.

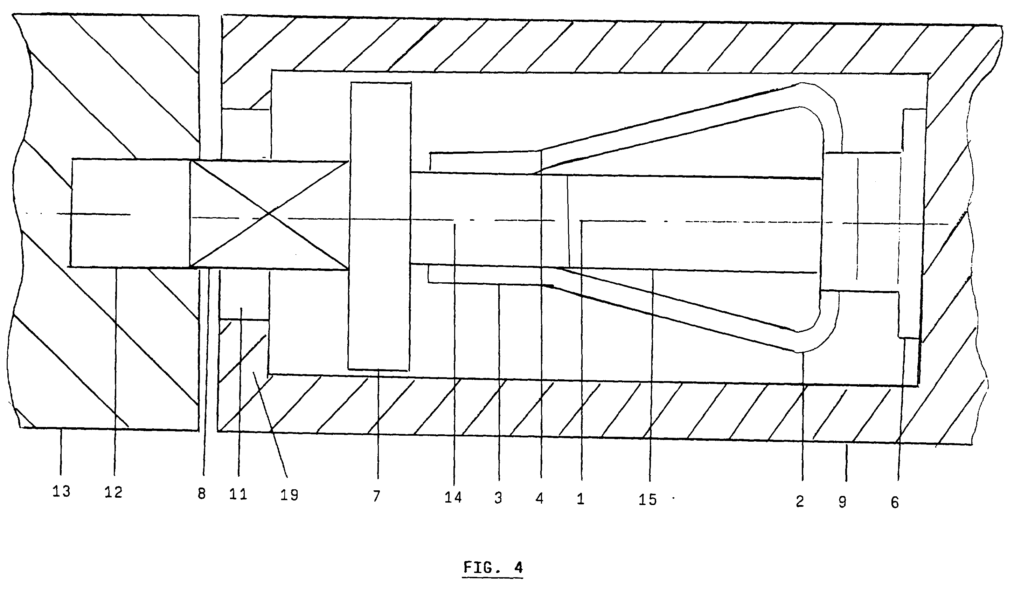

Fig. 4 zeigt die Rotationseinheit beim Einbau in das Gehäuse 9. Durch Erzeugen einer axialen Kraft entgegengesetzt zur axialen Kraft der Feder 6 wird diese gespannt und die Rotationseinheit kann in das Gehäuse 9 eingesetzt werden. Mit dem Fortfall der Kompressionskraft der Feder 6 drückt diese den Stift 1 in das Gehäuse und die Koppeleinheit 8 greift durch die Öffnung 11 hindurch und rastete in das entsprechende Gegenstück 12 des Tastaturdeckeis 13 ein.

Um eine Beschädigung der Rotationseinheit zu vermeiden, kann, beispielsweise beim Zustand einer Überdrehung des Tastaturdeckels, durch einen nicht dargestellten Mechanismus, wie beispielsweise einen Keil, eine Kraft in axialer Richtung des Stiftes 1 entgegengesetzt zur Kraft der Blattfeder 6 erzeugt werden. Dadurch wird der Stift 1 gegen die axiale Kraft der Feder 6 in das Gehäuse 9 hineingedrückt und die Rotationseinheit löst sich so durch das Zurückziehen von dem Tastaturdeckel 13.

### Bezugszeichenliste

- 1: Stift
- 2: Feder
- 3: Federschenkel
- 4: Federschenkel
- 5: Zapfen
- 6: Blattfeder
- 7: Kragen
- 8: Koppelelement
- 9: Gehäuse
- 10: Wand
- 11: Öffnung
- 12: Gegenstück zum Koppelelement
- 13: Tastaturdeckel
- 14: unrunder Abschnitt des Stifts
- 15: runder Abschnitt des Stifts

## Patentansprüche

1. Rotationseinheit für einen Tastaturdeckel (13) eines tragbaren Telefons, wobei die Rotationseinheit einen zwischen zwei Antriebsfederkräften eingespannten Stift (1)aufweist, dessen Radien in zwei aufeinander senkrechte stehenden Hauptrichtungen unterschiedlich sind,
**dadurch gekennzeichnet**, daß
der Stift (1) in Längsrichtung gegen eine axiale Federkraft beweglich ist.

2. Rotationseinheit nach Anspruch 1, **dadurch gekennzeichnet**, daß die Antriebsfederkräfte gegenläufig sind, senkrecht auf den Stift wirken und durch zwei Federschenkel (3, 4) einer Feder (2) erzeugt werden.

3. Rotationseinheit nach Anspruch 1 oder 2, **dadurch gekennzeichnet**, daß axiale Federkraft durch eine Blattfeder (6) erzeugt wird.

4. Rotationseinheit nach einem der vorangegangenen Ansprüche, **dadurch gekennzeichnet**, daß die Federschenkel (3, 4) zur Erzeugung der Antriebskräfte und die Feder (6) zur Erzeugung der axialen Kraft einstückig als ein Federelement (2) ausgebildet ist.

5. Rotationseinheit nach einem der vorangegangenen Ansprüche, **dadurch gekennzeichnet**, daß der Stift (1) einen unrunden Abschnitt (14) und einen runden Abschnitt (15) aufweist.

6. Rotationseinheit nach einem der vorangegangenen Ansprüche, **dadurch gekennzeichnet**, daß der Stift (1) ein Koppelelement (8) aufweist.

7. Tragbares Telefon mit einem Tastaturdeckel (13) mit einer Rotationseinheit nach einem der vorangegangenen Ansprüche.

8. Tragbares Telefon nach Anspruch 7, **dadurch gekennzeichnet**, daß der Tastaturdeckel (13) auf der einen Seite in eine feste Lagerung eingreift und auf der anderen Seite durch eine Rotationseinheit gehaltert ist.

9. Tragbares Telefon nach einem der Ansprüche 7 oder 8, **dadurch gekennzeichnet**, daß bei einer Öffnung des Tastaturdeckel (13) über seine Sollposition hinaus der Stift (1) durch eine Sicherungsvorrichtung gegen die axiale Federkraft aus dem Tastaturdeckel (13) herausgedrückt wird.

10. Tragbares Telefon nach Anspruch 9, **dadurch gekennzeichnet**, daß die Sicherungsvorrichtung durch einen Keil gebildet wird.
